# EUROPÄISCHE PATENTSCHRIFT

(11) **EP 3 204 287 B1**
(45) Veröffentlichungstag und Bekanntmachung des Hinweises auf die Patenterteilung: **12.12.2018**
(21) Anmeldenummer: 14792478.1
(22) Anmeldetag: 30.10.2014
(51) Int. Cl.: B63B 1/10, B63B 21/50, E02B 17/00, F03D 13/25, B63B 35/44, F03D 13/20

(54) **IN DER OFFENEN SEE SCHWIMMENDES UND ÜBER ABSPANNMITTEL MIT ANKERN VERBUNDENES TRAGWERK FÜR WINDKRAFTANLAGEN, SERVICESTATIONEN ODER KONVERTERSTATIONEN**
SUPPORT STRUCTURE FLOATING IN THE OPEN SEA AND CONNECTED TO ANCHORS BY BRACING MEANS, FOR WIND TURBINES, SERVICE STATIONS, OR CONVERTER STATIONS
STRUCTURE PORTEUSE FLOTTANT EN PLEINE MER ET RELIÉE À DES ANCRES PAR L'INTERMÉDIAIRE DE MOYENS DE RETENUE, POUR INSTALLATIONS ÉOLIENNES, STATIONS-SERVICE OU STATIONS CONVERTISSEURS

(30) Priorität: 30.10.2013 DE 102013222081
(43) Veröffentlichungstag der Anmeldung: 16.08.2017
(73) Patentinhaber: GICON windpower IP GmbH, 01219 Dresden (DE)
(72) Erfinder: GROSSMANN, Jochen, 01187 Dresden (DE); DAHLHAUS, Frank, 76351 Linkenheim-Hochstetten (DE)
(74) Vertreter: Kailuweit & Uhlemann Patentanwälte Partnerschaft mbB
(86) Internationale Anmeldenummer: PCT/EP2014/073342
(87) Internationale Veröffentlichungsnummer: WO 2015/063215

(56) Entgegenhaltungen:
- DE-A1-102009 054 608

## Beschreibung

Die Erfindung betrifft in der offenen See schwimmende und über Abspannmittel mit Ankern verbundene Tragwerke für Windkraftanlagen, Servicestationen oder Konverterstationen.

Schwimmende Auftriebskörper in Verbindung mit Ankern für Windkraftanlagen in der offenen See ist beispielsweise durch die Druckschrift GB 2 378 679 A bekannt. Das dazu realisierte Schwimmfundament besteht aus mehreren Auftriebskörpern, die über radiale Stahlstreben mit dem Turm der Windkraftanlage verbunden sind. Die Stahlstreben sind in Draufsicht kreuzförmig angeordnet und untereinander nicht verbunden. Treten an den radialen Stahlstreben des Bauwerks Biegekräfte auf, führen diese zu hohen Biegemomenten.

Durch die Druckschrift WO 2007/096680 A1 ist ein viereckiges Schwimmfundament bekannt, wobei die an den Ecken angeordneten Schwimmkörper untereinander durch Zugstäbe und Druckstäbe zu einem räumlichen Tragwerk verbunden sind. Ein zentraler großer Schwimmkörper trägt einen Turm, der über Schrägseile zu den außen liegenden Schwimmkörpern hin abgespannt ist. Diese Lösung erfordert einen nicht unerheblichen hohen Bauaufwand.

Die Druckschrift US 7,156,586 B2 beschreibt ein Schwimmtragwerk, das radial von einem Mast weg strebende Arme aufweist. Diese sind an ihren Enden mit Schwimmkörpern versehen. Zur Stabilisierung der Mastposition sind zwischen den Schwimmkörpern und dem Mast Schrägseile gespannt. An dem zentralen Mastfuß ergeben sich Spannungskonzentrationen, die zu Schwierigkeiten führen können, mindestens aber den Bauaufwand erhöhen.

Die Druckschrift EP 1 288 122 A2 offenbart ein Schwimmtragwerk in Gestalt einer massiven Schwimmplattform mit mehreren Kammern, die nach Art einer Taucherglocke mit Luft gefüllt und somit zur Erzeugung von Auftrieb herangezogen werden können. Die Errichtung eines solchen Schwimmfundaments ist mit einem hohen Materialaufwand verbunden.

Die Druckschriften EP 1 876 093 A3 und DE 10 2008 003 647 A1 beinhalten Schwimmtragwerke, bei denen sich Schwimmkörper an radial von einer Zentralkonstruktion weg erstreckenden Enden vorgesehen sind.

Durch die Druckschrift WO 2011/057 940 A2 ist eine Offshore-Windkraftanlage bekannt. Diese besitzt einen Schwimmkörper, der über Verbindungselemente mit dem Turm der Windkraftanlage verbunden ist. Darüber hinaus weist die Offshore-Windkraftanlage ein Gegengewicht am Turmende auf. Die Verbindungselemente sind dabei gleichmäßig um den Turm in mehreren Gruppen angeordnet. Eine untere Gruppe trägt im Wesentlichen den Turm und zwei obere Gruppen stützen und positionieren den Turm. Die oberen Gruppen greifen an übereinander liegenden Stellen des Turmes an. Durch die gleichmäßige Verteilung der Verbindungselemente kann sich der Turm gegenüber dem Schwimmkörper drehen. Damit ändert sich die Position des Turmes gegenüber dem Schwimmkörper. Gleichzeitig treten in den Verbindungselementen durch die unterschiedlichen Winkel der Verbindungselemente gegenüber dem Turm verschiedene Kräfte auf. Eine gleichmäßige Kraftverteilung ist nicht mehr gegeben.

Die Druckschrift US 2005/0 206 168 A1 beinhaltet eine Tragkonstruktion für Offshore-Windkraftanlagen, wobei der Turm der Windkraftanlage über eine Gitterstruktur mit Schwimmkörpern verbunden ist. Hauptelemente sind dabei Streben, die gleichmäßig um den den Turm verteilt sind. Eine Drehbewegung des Turmes gegenüber der Tragkonstruktion ist nicht ausgeschlossen.

Die Druckschrift WO 2004/055 272 A2 zeigt eine Offshore-Windkraftanlage mit der Möglichkeit der Schaffung einer nutzbaren Meereskultur. Der Turm der Windkraftanlage wird dabei über gleichmäßig am Turm befestigte und um diesen verteilte Elemente in einem Schwimmkörper gehalten. Dabei ist wiederum eine Drehbewegung des Turmes gegenüber dem Schwimmkörper nicht ausgeschlossen.

Die Druckschrift WO 2013/040871 A1 umfasst eine Halbtaucher-Schwimmplattform mit mindestens drei schwimmenden Betonhohlzylindern, die über eine Querrahmenstruktur miteinander verbunden sind. Die Betonhohlzylinder bilden die Auftriebskörper für die Schwimmplattform, die die Wasseroberfläche durchschneiden.

Durch die Druckschrift US 2010/0219645 A1 ist eine schwimmende Anordnung zur Energieerzeugung mit mindestens drei schwimmenden Einheiten jeweils mit einer Einrichtung zur Energieerzeugung bekannt. Die Einheiten besitzen jeweils einen Auftriebskörper und eine Einrichtung zur Energieerzeugung. Die Einheiten und damit die Einrichtungen zur Energieerzeugung sind in den Eckpunkten eines Dreiecks oder Vierecks angeordnet.

Die Druckschrift DE 10 2009 054 608 A1 offenbart ein Unterwassertragsystem für Anlagen mit Auftriebskörpern im Gewässer und entweder Gegengewichten oder Verankerungen am oder im Gewässergrund sowie Zugmitteln zwischen den Auftriebskörpern und den Gegengewichten oder Verankerungen. Dazu sind drei über Verbindungselemente miteinander gekoppelte Auftriebskörper jeweils über ein Zugmittel mit drei Gegengewichten oder Verankerungen verbunden. Die Auftriebskörper sind dabei in einer Ebene und an den Eckpunkten eines Dreiecks angeordnet. Die Auftriebskörper selbst besitzen die Form einer Kugel, eines Tropfens oder eines Ballons. Die Verbindungselemente sind Rohre. Verbindungselemente und/oder die Auftriebskörper können gleichzeitig als Träger für die Anlage fungieren. Ein Tragkörper für die Anlage kann ein Bestandteil des Unterwassertragsystems sein. Darüber hinaus können auch alle Bestandteile des Unterwassertragsystems als Träger der Anlage genutzt werden.

Der im Patentanspruch 1 angegebenen Erfindung liegt die Aufgabe zugrunde, ein in der offenen See schwimmfähiges Tragwerk zur sicheren und stabilen Verankerung eines Bauwerks als Windkraftanlage, Servicestation oder Konverterstation zu schaffen.

Diese Aufgabe wird mit den im Patentanspruch 1 aufgeführten Merkmalen gelöst.

Die in der offenen See schwimmenden und über Abspannmittel mit Ankern verbundenen Tragwerke für Windkraftanlagen, Servicestationen oder Konverterstationen zeichnen sich insbesondere durch ihre sichere und stabile Verankerung aus.

Dazu weist das Tragwerk einen unter Wasser angeordneten ersten Bestandteil und einen die Wasseroberfläche durchschneidenden zweiten Bestandteil auf.

Weiterhin besitzt der erste Bestandteil an den Eckpunkten eines Polygons angeordnete, sich in der Senkrechten zu einer Ebene erstreckende und als Träger des zweiten Bestandteils dienende erste Auftriebskörper und diese miteinander verbindende, in einer Ebene angeordnete und rohrförmig ausgebildete zweite Auftriebskörper. Im ersten Auftriebskörper sind eine mindestens zwei zweite Auftriebskörper miteinander verbindende Knotenkonstruktion mit einer sternförmig ausgebildeten Grundfläche und wenigstens eine in Verbindung mit der Knotenkonstruktion stehende, u-förmig ausgebildete und den ersten Auftriebskörper in der Senkrechten bereichsweise teilende Knotenplatte angeordnet. Die Knotenkonstruktion ist gleichzeitig der Träger für ein die Wasseroberfläche durchschneidendes rohrförmiges Tragelement und damit in Verbindung mit der Knotenplatte ein Kräfte aufnehmender und ableitender Knoten des Unterwassertragwerks. Der zweite Bestandteil besitzt die Wasseroberfläche schneidenden rohrförmigen Tragelemente auf den ersten Auftriebskörpern, die über Tragmittel mit einer Tragkonstruktion für die Windkraftanlage, die Servicestation oder die Konverterstation verbunden sind.

Das Tragwerk stellt damit ein räumliches Tragwerk in Form eines Raumtragwerks dar. Die ersten und die zweiten Auftriebskörper sind mittels der Knotenkonstruktionen der ersten Auftriebskörper miteinander verbunden. Das gilt insbesondere für die Hohlräume die insgesamt einen Hohlraum oder unterteilt mehrere Hohlräume des Tragwerks darstellen. Damit bildet der erste Bestandteil insgesamt einen Auftriebskörper. Die Hohlräume der sich teilweise unter Wasser befindlichen und mit den ersten Auftriebskörpern verbundenen Tragelemente können darüberhinaus vorteilhafterweise ebenfalls Auftriebskörper darstellen. Das betrifft ebenfalls die Knotenkonstruktionen als Bestandteile der ersten Auftriebskörper, der Hohlräume mit denen der ersten Auftriebskörper einen Hohlraum bilden. Damit sind diese nicht nur kraftaufnehmende und kraftableitende Knotenkonstruktionen sondern auch Auftriebskörper. Die zweiten Auftriebskörper bilden dabei gleichzeitig Abstandskörper für die ersten Auftriebskörper.

Damit ist ein kompaktes und sehr ökonomisch sowohl realisierbares als auch anwendbares in der offenen See schwimmendes Tragwerk für Windkraftanlagen, Servicestationen oder Konverterstationen vorhanden.

Die Anker gewährleisten in Zusammenwirkung mit den Abspannmitteln eine sichere und feste Positionierung des Tragwerks am Standort.

Vorteilhafte Ausgestaltungen der Erfindung sind in den Patentansprüchen 2 bis 12 angegeben.

Die Knotenkonstruktion besteht nach der Weiterbildung des Patentanspruchs 2 aus zwei beabstandet zueinander angeordneten Platten, wobei die zweiten Auftriebskörper an zwei Strahlen angreifen und damit die Hohlräume der zweiten Auftriebskörper über die Knotenkonstruktion miteinander verbunden sind. Weiterhin sind die Platten über vertikal angeordnete Scheiben miteinander verbunden. Die Knotenkonstruktion bildet damit eine in sich kompakte Konstruktion als Bestandteil des ersten Auftriebskörpers. Die auftretenden Kräfte der Auftriebskörper werden damit aufgenommen und weitergeleitet.

Das kann zum Einen an die Anker erfolgen, wobei auch die Kräfte der Windkraftanlage, der Servicestation oder der Konverterstation über die Tragelemente an die Knotenkonstruktion geleitet werden und durch diese aufgenommen werden.

Zum Anderen kann das über die Tragelemente erfolgen, wobei diese über die Abspannmittel mit den Ankern verbunden sind.

Natürlich können auch die Knotenkonstruktionen und die Tragelemente miteinander verbunden und über Abspannmittel weiterhin mit den Ankern verbunden sein.

In Fortführung können nach der Weiterbildung des Patentanspruchs 3 sind die Platten über vertikal nach außen zum Rand des ersten Auftriebskörpers hinauskragende Scheiben und/oder die Platten über nach außen über den Rand des ersten Auftriebskörpers hinauskragende Scheiben miteinander verbunden.

Die Knotenkonstruktion ist nach der Weiterbildung des Patentanspruchs 4 gleichzeitig der Träger für das Tragelement oder ein einen Endenbereich des Tragelements aufnehmendes Rohrstück für das Tragelement.

Entweder der Endenbereich des Tragelements oder das Rohrstück und der Mittelteil der Knotenkonstruktion befindet sich nach der Weiterbildung des Patentanspruchs 5 zwischen den Schenkeln der u-förmig ausgebildeten Knotenplatte. Damit ist eine kompakte Realisierung vorhanden.

Die ersten Auftriebskörper sind nach der Weiterbildung des Patentanspruchs 6 in den Eckpunkten eines Vierecks als Polygon angeordnet. Weiterhin ist die Grundfläche der Knotenkonstruktion ein Kreuz, wobei die Schenkel des Kreuzes jeweils einen rechten Winkel oder Winkel verschieden von 90° zueinander einschließen.

In den Auftriebskörpern sind nach der Weiterbildung des Patentanspruchs 7 mehrere Rippen und/oder wenigstens ein umlaufender Stabilisierungsring angeordnet. Diese erhöhen die Stabilität der Auftriebskörper.

Anker sind nach der Weiterbildung des Patentanspruchs 8 in einem Bereich korrespondierend zu den Auftriebskörpern angeordnet. Weiterhin sind zum Einen die Anker und zum Anderen die Knotenkonstruktionen der ersten Auftriebskörper, die Tragelemente oder sowohl die Knotenkonstruktionen der ersten Auftriebskörper als auch die Tragelemente über wenigstens ein vertikal orientiertes und/oder schräg verlaufendes Abspannmittel miteinander verbunden. Darüber können Anker oder die Anker über wenigstens ein vertikal orientiertes und/oder schräg verlaufendes Abspannmittel mit zweiten Auftriebskörpern verbunden sein. Insbesondere schräg verlaufende Abspannmittel verhindern ein Verdrehen des Tragwerks und damit insbesondere der Windkraftanlage.

Der Tragkörper weist nach der Weiterbildung des Patentanspruchs 9 wenigstens eine gegen Eis brechende und abweisende Kante oder wenigstens bereichsweise einen Konus auf. Die Kante kann durch einen plattenförmigen Körper oder durch winklig zueinander angeordnete plattenförmige Körper am Tragkörper ausgebildet sein. Darüber hinaus können auch wenigstens bereichsweise sternförmig angeordnete plattenförmige Körper am Tragkörper dafür angeordnet sein. Der Tragkörper kann aber auch einen konisch ausgebildeten Körper aufweisen, der den Tragkörper ummantelt. Der Tragkörper selbst kann wenigstens bereichsweise konisch ausgebildet sein.

Günstigerweise ist nach der Weiterbildung des Patentanspruchs 10 das Tragelement für eine Auftriebsfunktion hohl ausgebildet.

Die Auftriebskörper weisen nach der Weiterbildung des Patentanspruchs 11 wenigstens einen Hohlraum auf. Zur Positionierung als Unterwassertragwerk ist der Hohlraum ein sowohl mit Meerwasser flutbarer als auch mit einem gasförmigen Medium befüllbarer Hohlraum im Auftriebskörper ist. Zum Absenken des Unterwassertragwerks werden die Hohlräume der Auftriebskörper einfach geflutet, so dass das Unterwassertragwerk in Richtung Meeresboden absinkt. Nach Verbindung des Unterwassertragwerks mit den Ankern auf oder im Meeresboden wird gasförmiges Medium in die Hohlräume gedrückt, wobei gleichzeitig das darin enthaltene Meerwasser über ein Ventil nach außen gelangt. Dadurch erfolgt der Auftrieb des Unterwassertragwerks. Das Unterwassertragwerk wird mittels der Anker und der Abspannmittel unter Wasser gehalten.

Die Tragkonstruktion ist günstigerweise nach der Weiterbildung des Patentanspruchs 12 ein einen Endenbereich des Mastes der Windkraftanlage aufnehmendes Rohrteil oder eine Plattform für die Servicestation oder die Konverterstation.

Ein Ausführungsbeispiel der Erfindung ist in den Zeichnungen jeweils prinzipiell dargestellt und wird im Folgenden näher beschrieben.

Es zeigen:
- **Fig. 1**: ein in der offenen See schwimmendes und über Abspannmittel mit Ankern verbundenes Tragwerk mit einer Windkraftanlage und
- **Fig. 2**: einen ersten Auftriebskörper in Verbindung mit zweiten Auftriebskörpern und ein Tragelement.

Ein in der offenen See schwimmendes und über Abspannmittel 15 mit Ankern verbundenes Tragwerk 2 für Windkraftanlagen 1, Servicestationen oder Konverterstationen besteht im Wesentlichen aus einem unter Wasser angeordnetem ersten Bestandteil 3 und die Wasseroberfläche durchschneidenden zweiten Bestandteil 4.

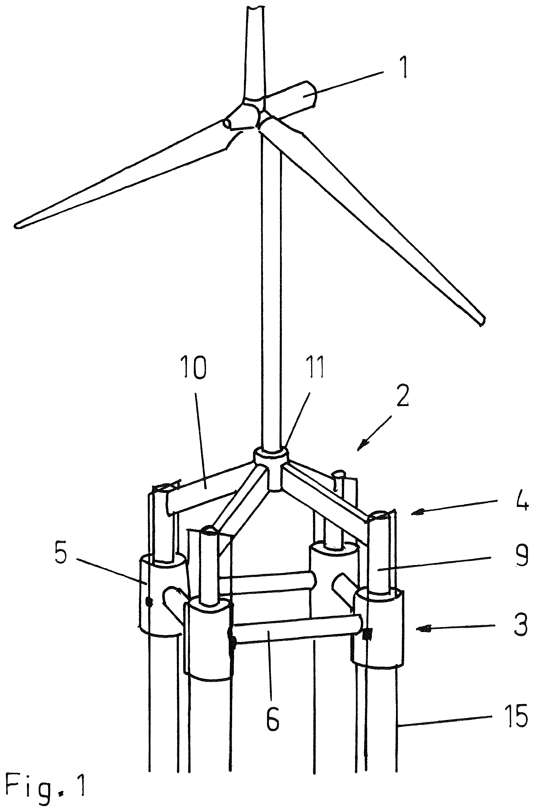

Die Fig. 1 zeigt ein in der offenen See schwimmendes und über Abspannmittel mit Ankern verbundenes Tragwerk mit einer Windkraftanlage in einer prinzipiellen Darstellung.

Der unter Wasser angeordnete erste Bestandteil 3 besitzt an den Eckpunkten eines Vierecks als Polygon angeordnete und sich in der Senkrechten zu einer Ebene erstreckende erste Auftriebskörper 5. Diese fungieren weiterhin als Träger des die Wasseroberfläche durchschneidenden zweiten Bestandteils 4 des Tragwerks 2. Die ersten Auftriebskörper 5 sind weiterhin miteinander über rohrförmig ausgebildete Auftriebskörper 6 miteinander verbunden, wobei letztere in einer Ebene angeordnet sind. Der erste Auftriebskörper 5 besitzt im Wesentlichen die Form eines abgeschlossenen hohlen Zylinderstücks mit einem Rohrstück als Wand, einer Grundplatte und einer Deckplatte. Die Wand weist Durchbrüche für die zweiten Auftriebskörper 6 auf und die Deckplatte besitzt eine Öffnung für ein Tragelement 9.

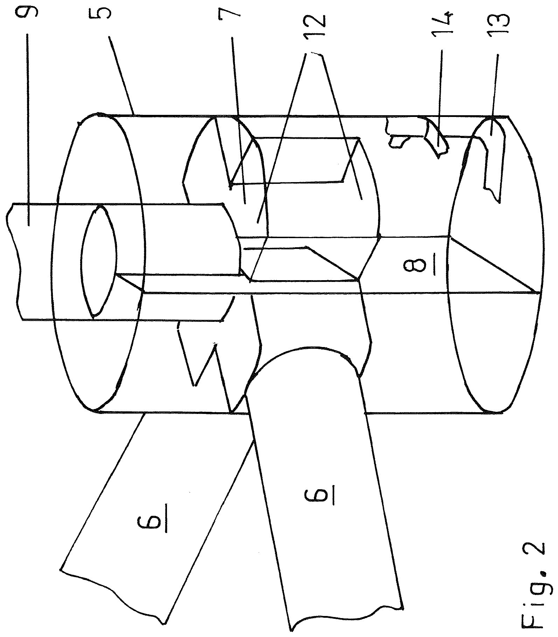

Die Fig. 2 zeigt einen ersten Auftriebskörper 5 in Verbindung mit zweiten Auftriebskörpern 6 und einem Tragelement 9 in einer prinzipiellen Darstellung.

Im ersten Auftriebskörper 5 ist eine mindestens zwei zweite Auftriebskörper 6 miteinander verbindende Knotenkonstruktion 7 mit einer sternförmig ausgebildeten Grundfläche angeordnet. Weiterhin befindet sich eine in Verbindung mit der Knotenkonstruktion 7 stehende, u-förmig ausgebildete und den ersten Auftriebskörper 5 in der Senkrechten bereichsweise teilende Knotenplatte 8 im ersten Auftriebskörper 5. Die Knotenkonstruktion 7 ist gleichzeitig der Träger für ein die Wasseroberfläche durchschneidendes rohrförmiges Tragelement 9. In Verbindung mit der Knotenplatte 8 ist diese damit ein Kräfte aufnehmender und ableitender Knoten des Unterwassertragwerks 3. Die Knotenkonstruktion 7 selbst besteht dazu aus zwei beabstandet zueinander angeordneten Platten 12, wobei die zweiten Auftriebskörper 6 an zwei Strahlen angreifen und damit die Hohlräume der zweiten Auftriebskörper 6 über die Knotenkonstruktion 7 miteinander verbunden sind. Der Endenbereich des Tragelements 9 und der Mittelteil der Knotenkonstruktion 7 befindet sich zwischen den Schenkeln der u-förmig ausgebildeten Knotenplatte 8. Die Platten 12 der Knotenkonstruktion 7 sind über vertikal angeordnete Scheiben miteinander verbunden. Die Grundfläche der Knotenkonstruktion 7 ist ein Kreuz als eine Sternform, wobei die Schenkel des Kreuzes jeweils einen rechten Winkel zueinander einschließen.

Die Platten 12 sind in einer Ausführungsform über vertikal nach außen zum Rand des ersten Auftriebskörpers 5 hinauskragende Scheiben und/oder über nach außen über den Rand des ersten Auftriebskörpers 5 hinauskragende Scheiben miteinander verbunden.
In den Auftriebskörpern 5, 6 sind mehrere Rippen 13 und/oder wenigstens ein umlaufender Stabilisierungsring 14 angeordnet.

Die Auftriebskörper 5, 6 weisen mindestens einen Hohlraum auf. Der Hohlraum ist zur Positionierung als Unterwassertragwerk 3 ein sowohl mit Meerwasser flutbarer als auch mit einem gasförmigen Medium befüllbarer Hohlraum der Auftriebskörpern 5, 6.

Der zweite Bestandteil 4 weist die die Wasseroberfläche schneidenden rohrförmigen Tragelemente 9 und die Tragmittel 10 mit einer Tragkonstruktion 11 für die Windkraftanlage 1 auf. Die Tragkonstruktion 11 ist dazu ein einen Endenbereich des Mastes der Windkraftanlage 1 aufnehmendes Rohrteil 11.

Anker sind korrespondierend zu den ersten Auftriebskörpern 5 angeordnet. Ein Anker kann mit der Knotenkonstruktion 7 eines ersten Auftriebskörpers 5 und/oder eines Tragelements 9 verbunden sein. Natürlich können diese auch über ein Abspannmittel zusammen mit einem Anker verbunden sein. Dazu ist das Abspannmittel 15 vertikal orientiert und/oder schräg verlaufend. Darüber hinaus können Anker oder die Anker über wenigstens ein vertikal orientiertes und/oder schräg verlaufendes Abspannmittel 15 mit zweiten Auftriebskörpern 6 verbunden sein.

## Patentansprüche

1. In der offenen See schwimmendes und über Abspannmittel mit Ankern verbundenes Tragwerk (2) für Windkraftanlagen (1), Servicestationen oder Konverterstationen mit
- einem unter Wasser angeordnetem ersten Bestandteil (3) mit ersten an den Eckpunkten eines Polygons angeordneten, sich in der Senkrechten zu einer Ebene erstreckenden und als Träger eines die Wasseroberfläche durchschneidenden zweiten Bestandteils (4) dienenden Auftriebskörpern (5) und zweiten die ersten Auftriebskörper (5) miteinander verbindenden, in einer Ebene angeordneten und rohrförmig ausgebildeten Auftriebskörpern (6), wobei im ersten Auftriebskörper (5) eine mindestens zwei zweite Auftriebskörper (6) miteinander verbindende Knotenkonstruktion (7) mit einer sternförmig ausgebildeten Grundfläche und wenigstens eine in Verbindung mit der Knotenkonstruktion (7) stehende, u-förmig ausgebildete und den ersten Auftriebskörper (5) in der Senkrechten bereichsweise teilende Knotenplatte (8) angeordnet sind und die Knotenkonstruktion (7) gleichzeitig der Träger für ein die Wasseroberfläche durchschneidendes rohrförmiges Tragelement (9) und damit in Verbindung mit der Knotenplatte (8) ein Kräfte aufnehmender und ableitender Knoten des Unterwassertragwerks (3) ist, und
- dem zweiten Bestandteil (4) mit den die Wasseroberfläche schneidenden rohrförmigen Tragelementen (9) auf den ersten Auftriebskörpern (5), die über Tragmittel (10) mit einer Tragkonstruktion (11) für die Windkraftanlage (1), die Servicestation oder die Konverterstation verbunden sind, **dadurch gekennzeichnet, dass** wenigstens eine in Verbindung mit der Knotenkonstruktion (7) stehende, u-förmig ausgebildete und den ersten Auftriebskörper (5) in der Senkrechten bereichsweise teilenden Knotenplatte (8) angeordnet ist und dass die Knotenkonstruktion (7) gleichzeitig der Träger für ein die Wasseroberfläche durchschneidendes rohrföhrmiges Tragelement (9) und damit in Verbindung mit der Knotenplatte (8) eine Kräfte aufnehmender und ableitender Knoten des Unterwassertragwerks (3) ist.

2. Tragwerk nach Patentanspruch 1, **dadurch gekennzeichnet, dass** die Knotenkonstruktion (7) aus zwei beabstandet zueinander angeordneten Platten (12) besteht, wobei die zweiten Auftriebskörper (6) an zwei Strahlen angreifen und damit die Hohlräume der zweiten Auftriebskörper (6) über die Knotenkonstruktion (7) miteinander verbunden sind und dass die Platten (12) über vertikal angeordnete Scheiben miteinander verbunden sind.

3. Tragwerk nach Patentanspruch 1 und 2, **dadurch gekennzeichnet, dass** die Platten (12) über vertikal nach außen zum Rand des ersten Auftriebskörpers (5) hinauskragende Scheiben und/oder dass die Platten (12) über nach außen über den Rand des ersten Auftriebskörpers (5) hinauskragende Scheiben miteinander verbunden sind.

4. Tragwerk nach Patentanspruch 1, **dadurch gekennzeichnet, dass** die Knotenkonstruktion (7) gleichzeitig der Träger für das Tragelement (9) oder ein einen Endenbereich des Tragelements (9) aufnehmendes Rohrstück (9) ist.

5. Tragwerk nach Patentanspruch 1 und 4, **dadurch gekennzeichnet, dass** sich entweder der Endenbereich des Tragelements (9) oder das Rohrstück (9) und der Mittelteil der Knotenkonstruktion (7) zwischen den Schenkeln der u-förmig ausgebildeten Knotenplatte (8) befindet.

6. Tragwerk nach Patentanspruch 1, **dadurch gekennzeichnet, dass** die ersten Auftriebskörper (5) in den Eckpunkten eines Vierecks als Polygon angeordnet sind und dass die Grundfläche der Knotenkonstruktion (7) ein Kreuz ist, wobei die Schenkel des Kreuzes jeweils einen rechten Winkel oder Winkel verschieden von 90° zueinander einschließen.

7. Tragwerk nach wenigstens einem der Patentansprüche 1 bis 6, **dadurch gekennzeichnet, dass** in den Auftriebskörper (5, 6) mehrere Rippen (13) und/oder wenigstens ein umlaufender Stabilisierungsring (14) angeordnet sind.

8. Tragwerk nach wenigstens einem der Patentansprüche 1 bis 3, **dadurch gekennzeichnet, dass** Anker in einem Bereich korrespondierend zu den Auftriebskörpern (5, 6) angeordnet sind und dass zum Einen die Anker und zum Anderen die Knotenkonstruktionen (7) der ersten Auftriebskörper (5), die Tragelemente (9) oder sowohl die Knotenkonstruktionen (7) der ersten Auftriebskörper als auch die Tragelemente (9) über wenigstens ein vertikal orientiertes und/oder schräg verlaufendes Abspannmittel (15) miteinander verbunden sind und/oder dass Anker oder die Anker über wenigstens ein vertikal orientiertes und/oder schräg verlaufendes Abspannmittel (15) mit zweiten Auftriebskörpern (6) verbunden sind.

9. Tragwerk nach Patentanspruch 1, **dadurch gekennzeichnet, dass** ein Tragelement (9) wenigstens eine gegen Eis brechende und abweisende Kante oder einen Konus aufweist oder wenigstens bereichsweise konisch ausgebildet ist.

10. Tragwerk nach Patentanspruch 1, **dadurch gekennzeichnet, dass** das Tragelement (9) für eine Auftriebsfunktion hohl ausgebildet ist.

11. Tragwerk nach Patentanspruch 1, **dadurch gekennzeichnet, dass** die Auftriebskörper (5, 6) mindestens einen Hohlraum aufweisen und dass der Hohlraum zur Positionierung als Unterwassertragwerk (3) ein sowohl mit Meerwasser flutbarer als auch mit einem gasförmigen Medium befüllbarer Hohlraum der Auftriebskörpern (5, 6) ist.

12. Tragwerk nach Patentanspruch 1, **dadurch gekennzeichnet, dass** die Tragkonstruktion (11) ein einen Endenbereich des Mastes der Windkraftanlage (1) aufnehmendes Rohrteil (11) oder eine Plattform für die Servicestation oder die Konverterstation ist.

## Claims

1. Support structure (2) floating in the open sea and connected to anchors by bracing elements, for wind turbines (1), service stations or converter stations with
- a first component (3) arranged under water with first buoyant bodies (5) arranged at the corner points of a polygon, extending perpendicular to a plane and serving as carriers of a second component (4) cutting through the surface of the water and second buoyant bodies (6) connecting the first buoyant bodies (5) with one another, arranged in a plane and having a tube-shaped design, wherein a nodal structure (7) with a star-shaped base area that connects at least two second buoyant bodies (6) with one another and at least one junction plate (8) in contact with the nodal structure (7), designed in the shape of a U and perpendicularly dividing the first buoyant body (5) in certain sections are arranged in the first buoyant body (5), and the nodal structure (7) is simultaneously the carrier for a tube-shaped support element (9) cutting through the surface of the water and is therefore, in connection with the junction plate (8), a node of the underwater support structure (3) that absorbs and channels along forces, and
- the second component (4) with the tube-shaped support elements (9) cutting through the surface of the water on the first buoyant bodies (5), which are connected via support gear (10) to a foundation structure (11) for the wind turbine (1), the service station or the converter station, **characterized in that** at least one junction plate (8) in contact with the nodal structure (7), designed in the shape of a U and perpendicularly dividing the first buoyant body (5) in certain sections, is arranged, and that the nodal structure (7) is simultaneously the carrier for a tube-shaped support element (9) cutting through the surface of the water and therefore is a node of the underwater support structure (3) that absorbs and channels off forces in connection with the junction plate (8).

2. Support structure according to claim 1, **characterized in that** the nodal structure (7) is comprised of two plates (12) at a distance to one another, wherein the second buoyant bodies (6) engage along two lines and therefore connect hollow spaces of the second buoyant bodies (6) with one another via the nodal structure (7) and that the plates (12) are connected to one another via vertical disks.

3. Support structure according to claims 1 and 2, **characterized in that** the plates (12) are connected with one another via disks projecting vertically outward at the edge of the first buoyant body (5) and/or that the plates (12) are connected with one another via disks projecting outward over the edge of the first buoyant body (5).

4. Support structure according to claim 1, **characterized in that** the nodal structure (7) is simultaneously the carrier for the support element (9) or a pipe section (9) accommodating the end area of the support element (9).

5. Support structure according to claims 1 and 4, **characterized in that** either the end area of the support element (9) or the pipe section (9) and the center part of the nodal structure (7) are located between the legs of the U-shaped junction plate (8).

6. Support structure according to claim 1, **characterized in that** the first buoyant bodies (5) are arranged in the corner points of a square as the polygon and that the base area of the nodal structure (7) is a cross, wherein the legs of the cross are each at a right angle or an angle different than 90° with respect to one another.

7. Support structure according to at least one of the claims 1 to 6, **characterized in that** several ribs (13) and/or at least one circumferential stabilization ring (14) is arranged in the buoyant bodies (5, 6).

8. Support structure according to at least one of the claims 1 to 3, **characterized in that** anchors are arranged in an area corresponding to the buoyant bodies (5, 6) and that, on the one hand, the anchors and, on the other hand, the nodal structures (7) of the first buoyant bodies (5), the support elements (9) or both the nodal structures (7) of the first buoyant bodies and the support elements (9) are connected with one another via at least one bracing element (15) that is oriented vertically and/or runs obliquely and/or that anchors or the anchor is connected via at least one bracing element (15) that is oriented vertically and/or runs obliquely to second buoyant bodies (6).

9. Support structure according to claim 1, **characterized in that** a support element (9) has an ice-breaking and repelling edge or a cone, or at least has a conical design in certain sections.

10. Support structure according to claim 1, **characterized in that** the support element (9) has a hollow design for a buoyancy function.

11. Support structure according to claim 1, **characterized in that** the buoyant bodies (5, 6) have at least one hollow space and that the hollow space is a hollow space of the buoyant bodies (5, 6) that can both be flooded with sea water and filled with a gaseous medium for positioning as an underwater support structure (3).

12. Support structure according to claim 1, **characterized in that** the foundation structure (11) is a pipe section (11) accommodating an end area of the tower of the wind turbine (1) or a platform for the service station or the converter station.

## Revendications

1. Structure porteuse (2), flottant en haute mer et reliée à des ancres par le biais de moyens d'haubanage, pour éoliennes (1), stations-services ou postes de conversion, comprenant
- un premier élément constitutif (3) disposé sous l'eau et comprenant des premiers corps de flottabilité (5) disposés aux sommets d'un polygone, s'étendant suivant les normales à un plan et servant de support d'un deuxième élément constitutif (4) traversant la surface de l'eau et des deuxièmes corps de flottabilité (6) reliant les premiers corps de flottabilité (5) les uns aux autres, disposés dans un plan et réalisés de manière tubulaire, une construction nodulaire (7) reliant au moins deux deuxièmes corps de flottabilité (6) les uns aux autres et dotée d'une surface de base réalisée en forme d'étoile et au moins une plaque nodulaire (8) en liaison avec la construction nodulaire (7), réalisée en forme de U et divisant dans certaines zones le premier corps de flottabilité (5) dans le plan vertical étant disposées dans le premier corps de flottabilité (5), et la construction nodulaire (7) étant simultanément le support pour un élément porteur (9) tubulaire traversant la surface de l'eau et par conséquent, en association avec la plaque nodulaire (8), un noeud absorbant et dissipant des forces de la structure porteuse sous-marine (3), et
- le deuxième élément constitutif (4) comprenant les éléments porteurs (9) tubulaires croisant la surface de l'eau sur les premiers corps de flottabilité (5), lesquels sont reliés, par le biais de moyens porteurs (10), à une construction porteuse (11) pour l'éolienne (1), la station-service ou le poste de conversion, **caractérisée en ce qu'**au moins une plaque nodulaire (8) en liaison avec la construction nodulaire (7), réalisée en forme de U et divisant dans certaines zones le premier corps de flottabilité (5) dans le plan vertical est disposée, et **en ce que** la construction nodulaire (7) est simultanément le support pour un élément porteur (9) tubulaire traversant la surface de l'eau et par conséquent, en association avec la plaque nodulaire (8), un noeud absorbant et dissipant des forces de la structure porteuse sous-marine (3).

2. Structure porteuse selon la revendication 1, **caractérisée en ce que** la construction nodulaire (7) est constituée de deux plaques (12) espacées l'une de l'autre, les deuxièmes corps de flottabilité (6) agissant sur deux demi-droites et par conséquent les cavités des deuxièmes corps de flottabilité (6) étant reliées les unes aux autres par le biais de la construction nodulaire (7), et **en ce que** les plaques (12) sont reliées l'une à l'autre par le biais de plateaux disposés verticalement.

3. Structure porteuse selon les revendications 1 et 2, **caractérisée en ce que** les plaques (12) sont reliées l'une à l'autre par le biais de plateaux faisant saillie vers l'extérieur jusqu'au bord du premier corps de flottabilité (5) et/ou **en ce que** les plaques (12) sont reliées l'une à l'autre par le biais de plateaux faisant saillie vers l'extérieur au-delà du bord du premier corps de flottabilité (5).

4. Structure porteuse selon la revendication 1, **caractérisée en ce que** la construction nodulaire (7) est simultanément le support pour l'élément porteur (9) ou une pièce tubulaire (9) recevant une zone d'extrémité de l'élément porteur (9).

5. Structure porteuse selon les revendications 1 et 4, **caractérisée en ce que** soit la zone d'extrémité de l'élément porteur (9) soit la pièce tubulaire (9) et la partie médiane de la construction nodulaire (7) se trouvent entre les branches de la plaque nodulaire (8) réalisée en forme de U.

6. Structure porteuse selon la revendication 1, **caractérisée en ce que** les premiers corps de flottabilité (5) sont disposés aux sommets d'un quadrilatère faisant office de polygone, et **en ce que** la surface de base de la construction nodulaire (7) est une croix, les branches de la croix formant respectivement un angle droit ou un angle différent de 90 ° l'une par rapport à l'autre.

7. Structure porteuse selon au moins l'une des revendications 1 à 6, **caractérisée en ce que** plusieurs nervures (13) et/ou au moins une bague de stabilisation (14) périphérique sont disposées dans les corps de flottabilité (5, 6).

8. Structure porteuse selon au moins l'une des revendications 1 à 3, **caractérisée en ce que** des ancres sont disposées dans une zone correspondant aux corps de flottabilité (5, 6), et **en ce que** d'une part les ancres et d'autre part les constructions nodulaires (7) des premiers corps de flottabilité (5), les éléments porteurs (9) ou à la fois les constructions nodulaires (7) des premiers corps de flottabilité et les éléments porteurs (9) sont reliés les uns aux autres par le biais d'au moins un moyen d'haubanage (15) orienté verticalement et/ou s'étendant de manière inclinée, et/ou **en ce que** l'ancre ou les ancres sont reliées à des deuxièmes corps de flottabilité (6) par le biais d'au moins un moyen d'haubanage (15) orienté verticalement et/ou s'étendant de manière inclinée.

9. Structure porteuse selon la revendication 1, **caractérisée en ce qu'**un élément porteur (9) comprend au moins une arête brisant et repoussant la glace ou un cône ou est réalisé de manière conique au moins dans certaines zones.

10. Structure porteuse selon la revendication 1, **caractérisée en ce que** l'élément porteur (9) est réalisé de manière creuse pour remplir une fonction de flottabilité.

11. Structure porteuse selon la revendication 1, **caractérisée en ce que** les corps de flottabilité (5, 6) comprennent au moins une cavité, et **en ce que** la cavité est, en vue du positionnement en tant que structure porteuse sous-marine (3), une cavité des corps de flottabilité (5, 6) pouvant à la fois être remplie d'eau de mer et remplie d'un milieu gazeux.

12. Structure porteuse selon la revendication 1, **caractérisée en ce que** la construction porteuse (11) est une partie tubulaire (11) recevant une zone d'extrémité du mât de l'éolienne (1) ou une plate-forme pour la station-service ou le poste de conversion.
